(19) Europäisches Patentamt
European Patent Office
Office européen des brevets

(11) Veröffentlichungsnummer: **0 469 464 B1**

(12) **EUROPÄISCHE PATENTSCHRIFT**

(45) Veröffentlichungstag der Patentschrift: **27.09.95**

(51) Int. Cl.[6]: **F16D 69/02**

(21) Anmeldenummer: **91112476.6**

(22) Anmeldetag: **25.07.91**

# (54) Reibbelag und Verfahren zu dessen Herstellung.

(30) Priorität: **02.08.90 DE 4024547**

(43) Veröffentlichungstag der Anmeldung:
**05.02.92 Patentblatt 92/06**

(45) Bekanntmachung des Hinweises auf die Patenterteilung:
**27.09.95 Patentblatt 95/39**

(84) Benannte Vertragsstaaten:
**AT DE ES FR GB IT SE**

(56) Entgegenhaltungen:
**WO-A-88/00930**
**FR-A- 959 938**
**US-A- 2 877 198**
**DE-C- 566 741**
**FR-A- 2 319 596**
**US-A- 2 951 280**

**DATABASE WPIL Section Ch, Week 27, Derwent Publications Ltd., London, GB; Class L02, AN 86-173423 & JP-A-61 106 687 (TOYOTA JIDOSJHA) 24 May 1986**

**PATENT ABSTRACTS OF JAPAN vol. 010, 30 September 1986 & JP-A-61 106 687 (AISIN CHEM CO LTD)**

(73) Patentinhaber: **MIBA FRICTEC GESELLSCHAFT m.b.H.**
**Dr.-Mitterbauer-Strasse 3**
**A-4663 Laakirchen (AT)**

(72) Erfinder: **Kapl, Gerhard**
**Robert-Stolz-Strasse 18**
**A-4020 Linz (AT)**
Erfinder: **Hinterwaldner, Rudolf**
**Kastaniengasse 13**
**D-8000 München (DE)**

(74) Vertreter: **Witte, Alexander, Dr.-Ing. et al**
**Witte, Weller, Gahlert & Otten**
**Patentanwälte**
**Rotebühlstrasse 121**
**D-70178 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft einen Reibbelag, bestehend aus einer anorganischen, silicathaltigen Bindemittelmatrix, in der Zuschlagstoffe integriert sind, sowie ein Verfahren zu dessen Herstellung.

Ein derartiger Reibbelag ist aus der US-A-4 019 912 oder WO 88/00930 bekannt.

Reibbeläge dienen zum Herstellen von Bremsklötzen, Bremsbelägen, Kupplungsbelägen, die hauptsächlich in Bremsen und Kupplungen von Kraftfahrzeugen, Schienen- und Luftfahrzeugen und maschinellen Ausrüstungen eingesetzt werden.

Darüber hinaus gibt es noch weitere Einsatzgebiete auf dem Gebiet der Technik, beispielsweise als Reibbelag von Synchronringen, Achsbremsen für Traktoren o. dgl.

Reibbeläge sind beim Einsatz hohen Beanspruchungen ausgesetzt und müssen, damit sie wirtschaftlich einsetzbar sind, eine hohe Lebensdauer aufweisen. Dazu ist es notwendig, daß diese bei verschiedenen Gleitgeschwindigkeiten einen konstanten Reibwert aufweisen, der auch über einen großen Druckbereich unverändert sein soll. Darüber hinaus ist eine gute Temperaturstabilität erforderlich, da insbesondere bei Bremsbelägen Temperaturen bis über 800 °C auftreten können.

Reibbeläge sind als Vielkomponentensystem aufgebaut, wobei sich die einzelnen Komponenten aus Verstärkungsmitteln, Füllstoffen, Gleit- und Schmierstoffen und Reibwertmodifikatoren zusammensetzen, die allesamt gleichmäßig verteilt in einer Bindemittelmatrix aufgenommen sind. Als die Bindemittelmatrix aufbauende Bindemittel werden zur Herstellung von Reibbelägen üblicherweise Novolakharze eingesetzt. Neben den novolakstämmigen Bindemitteln sind auch Phenol- und Kresol-Resole im Einsatz. Beim Einsatz von feucht aufbereiteten Massen sind die lösungsmittelhaltigen und wässrigen Resole vorherrschend. Ein wichtiger Parameter bei diesen flüssigen Bindemitteln ist, daß sie eine hohe Imprägnierfähigkeit, gleichmäßige Abtrocknungs- und Abbindegeschwindigkeiten und gute Verträglichkeit zu eventuell eingesetzten Kautschukmodifikatoren aufweisen. Nachteilig an den Bindemitteln auf Kunstharzbasis ist, daß sie eine nicht ausreichende Temperaturstabilität aufweisen. So ist beispielsweise bei einem Reibbelag, der als Scheibenbremsbelag dient, ein kritischer Parameter das sogenannte "Fading-Verhalten". Bei mehrfacher, in kurzen Abständen erfolgter Abbremsung aus einer vorgegebenen Geschwindigkeit ist, um einen konstanten Bremsweg zu erreichen, eine immer höhere Pedalkraft notwendig, da während der jeweiligen Bremsung der Reibwert von einem temperaturabhängigen Anfangsreibwert auf einen immer niedrigen Endreibwert abfällt (Definition Fading). Um bei derartigen Scheibenbremsbelägen zusätzlich eine weitgehendste Quietsch- und Rubbelfreiheit erzielen zu können, ist es bekannt geworden, die Bindemittelsysteme mit Elastomeren zu flexibilisieren oder durch Zusätze von Epoxid- oder Melaminharzen die Scherfestigkeit zu verbessern. Dies hat allerdings den Nachteil, daß durch den erhöhten Anteil an Kunststoffen die Temperaturstabilität erheblich abnimmt. Ferner ist nachteilig an einem Verfahren zur Herstellung von solchen Reibbelägen, daß die eigentliche Formgebung und Härtung einer aufwendigen Verfahrenstechnik bedarf. Insbesondere bei der sogenannten Heißhärtung, bei der die Preßlinge mit hohem Druck bearbeitet werden (4 000 bis 8 000 kN-Pressen), beispielsweise beim sogenannten Etagenpressen, ist nicht sichergestellt, daß ein gleichmäßiger Druck auf die Preßlinge ausgeübt wird, so daß dann hohe innere Spannungen im Material auftreten können. Besonders nachteilig an dieser Verfahrensweise sind die relativ hohen Schrumpfwerte beim Einsatz der polykondensierenden Phenol- und Novolakharze, wodurch sehr hohe Schwundspannungen im Reibbelag erzeugt werden. Die Temperaturbeständigkeit dieser Harze im Einsatz ist begrenzt, insbesondere bei der Verwendung als Bremsbeläge, wobei bei starker Beanspruchung auch über längeren Zeitraum andauernde Spitzenwerte von 500 bis 1 000 °C erreicht werden können. Dies hat dann einen negativen Einfluß auf das zuvor erwähnte Fading-Verhalten.

Derartige Reibbeläge haben ferner zum Nachteil, daß sie bei hohen Temperaturen einen sehr hohen Verschleiß zeigen. Weiterhin ist nachteilig, daß die Verarbeitung von phenolhaltigen Bindemitteln Gefahren für die Umwelt und die in der Herstellungstechnik arbeitenden Personen darstellen. Neben der aufwendigen Entsorgung am Arbeitsplatz muß auch die Abluft einer gesonderten, kostspieligen Nachbehandlung unterzogen werden. Es ist auch abzusehen, daß abgenutzte Reibbeläge in Zukunft als Sondermüll sehr kostenaufwendig entsorgt werden müssen.

Es ist schon bekannt geworden, neben den kunstharzgebundenen Reibmaterialien auch Reibbeläge aus Sintermetall herzustellen, die insbesondere durch Sintern von Metallpulvern erhalten werden. Derartige Sinterbeläge weisen zwar eine relativ hohe Temperaturbeständigkeit auf, vielfach sind jedoch durch die hohen Dichten Grenzen im Einsatz gegeben. Bremsbeläge aus Sintermetallen beinhalten die Gefahr von Verschweißungen mit dem Gegenmaterial, also beispielsweise mit dem Metall der Bremsscheibe. Ferner ist diese Herstellungstechnik aufwendig und teuer.

Aus der eingangs erwähnten US-A-4 019 912 ist bekannt, einen Reibbelag dadurch aufzubauen, daß eine anorganische, silicathaltige Masse mit Verstärkungsfasern aus kohlenstoffhaltigem Material vermischt

wird und aus dieser Masse unter Schutzgasatmosphäre und durch Erwärmen auf Temperaturen von mehr als 900 °C und unter Anwenden eines sehr hohen Druckes (400 kp/$cm^2$) ein Reibbelag hergestellt wird. Diese Herstellungsweise ist aufgrund der hohen Temperatur und der hohen auszuübenden Drücke apparativ äußerst aufwendig und eignet sich nicht zur Herstellung von Bremsbelägen, da bei diesen hohen Temperaturen organische Fasermaterialien oder organische Füll- oder Verstärkungsmittel pyrolysieren.

Aus der WO 89/08685 ist bekannt, einem Reibbelag auf Kunstharzbasis feingemahlenes Glas sowie Alkalisilicate bis zu einem Höchstgehalt von 10 % zuzusetzen. Die Alkalisilicate in Form von Wasserglas binden das feingemahlene Glaspulver beim Übergang des Alkaliwasserglases von seinem Sol- in den Gelzustand. Die so gebildete Masse muß anschließend unter Anwendung von erhöhten Temperaturen von mehr als 500 °C und Anwendung von sehr hohen Drücken in einen Reibbelag umgewandelt werden. Auch diese Herstellung ist aufgrund der hohen Temperaturen und der hohen anzuwendenden Drücke apparativ äußerst aufwendig.

Weitere Reibbeläge unter Verwendung von silicathaltigen, anorganischen Bindern neben organischen Bindemitteln unter Anwendung von hoher Temperatur und hohem Druck sind ferner aus den Dokumenten JP-A-59-24776, JP-A-61-106687, DE-A-2 610 233, DE-A-3 303 696 und DE-A-2 808 174 bekannt.

Aufgabe der vorliegenden Erfindung ist, Reibbeläge zu schaffen, die einfach herzustellen sind, insbesondere nicht die Anwendung von hohen Drücken und hoher Temperatur notwendig machen, gute Eigenschaften, wie insbesondere gutes Fading-Verhalten, hohe Temperaturstabilität und eine lange Lebensdauer aufweisen.

Erfindungsgemäß wird die Aufgabe dadurch gelöst, daß die Bindemittelmatrix aus einer in Gegenwart von Wasser ausgehärteten Mischung an

a) feinteiligem $SiO_2$ und

b) zumindest teilweise wasserlöslichen Silicaten hergestellt ist. Es wurde festgestellt, daß die Mischung aus den feinteiligen Komponenten eine sehr hohe Reaktivität aufweist, die dazu führt, daß in Gegenwart von Wasser eine Polykondensation stattfindet, und zwar ohne Ausübung von hohen Temperaturen und hohen Drücken, die sofort zu einsatzbereiten Reibmaterialien führt. Das Wasser selbst nimmt nicht an der Reaktion teil, sondern dient lediglich als Reaktionsvehikel und dampft anschließend aus.

Die dabei entstehende Bindemittelmatrix, die aus einer dreidimensionalen Silicatgitterstruktur aufgebaut ist, sorgt zum einen für eine hervorragende mechanische Stabilität des Reibbelages und außerdem für eine extrem hohe Temperaturbeständigkeit. Ferner können die Zuschlagstoffe wie Füllstoffe, Gleit- und Schmierstoffe und Reibwertmodifikatoren feindispers verteilt in der Silicatmatrix aufgenommen werden. Es hat sich überraschenderweise herausgestellt, daß bei Reibbelägen, die mit der erfindungsgemäßen silicathaltigen Bindemittelmatrix versehen sind, Verstärkungsmittel in Form von Fasern in weiten Einsatzbereichen nicht mehr notwendig sind. So ist es beispielsweise möglich, in Bremsbelägen von dem Zusatz von Fasern, insbesondere von Asbestfasern, abzusehen.

Mit der erfindungsgemäßen silicathaltigen Bindemittelmatrix sind außerdem Temperaturdauerbeständigkeiten von über 1 000 °C zu erreichen. Dabei sind Temperaturbeständigkeiten bis zu 1 500 °C zu beobachten. Weitere Vorteile sind, daß die Bindemittelmatrix nicht brennbar ist. Außerdem weist das Silicatgerüst eine hohe Beständigkeit gegen Lösungsmittel, Fette, Öle, Treibstoffe aller Art sowie gegen starke Laugen und Säuren auf. Neben der extrem hohen Härte der Bindemittelmatrix ist eine hohe Biegefestigkeit, z.B. bis zu 30 MPa, eine hohe Druckfestigkeit, z.B. bis zu 90 MPa, ein hoher Elastizitätsmodul und eine hohe Schwingungsdämpfung zu beobachten.

Ferner weist die Silicat-Bindemittelmatrix einen sehr niedrigen thermischen Wärmeausdehnungskoeffizienten (etwa 4 bis $9x10^{-6}$ $K^{-1}$). Ferner wurden äußerst niedrige Schrumpf- und Kriecheigenschaften festgestellt, die wesentlich niedriger als bei kunstharzgebundenen Reibbelägen sind. Ferner wird eine sehr hohe Dimensionsstabilität bei Temperaturwechselbelastungen gefunden. Im Hinblick auf Sintermetallbeläge sind niedere spezifische Gewichte zu verzeichnen. Außerdem ist die Silicatmatrix umweltfreundlich, so daß keine Entsorgungsprobleme auftreten.

Bei der Herstellung ergeben sich die Vorteile, daß niedrige Verarbeitungstemperaturen zwischen 20 und 100° möglich sind, wobei ein schutzgasfreies und lösungsmittelfreies Verarbeiten möglich ist. Als Lösungsmittel ist lediglich Wasser zum Anteigen notwendig, das bei der Vernetzungsreaktion teilweise mit in die Matrix eingebaut werden kann, teilweise bei anschließenden Nachhärtevorgängen entweicht. Die Ausgangsmasse ist gieß-, extrudier- und preßbar, so daß alle gewöhnlichen Verarbeitungstechniken eingesetzt werden können. Der Härtevorgang selbst, der durch Wärmeenergie unterstützt wird, kommt ohne Preßdrükke aus, d.h., es sind auch keine aufwendigen Apparaturen zur Herstellung der Reibbeläge notwendig.

Bei der Polykondensation der Mischung aus feinteiligem $SiO_2$ und zumindest teilweise wasserlöslichen Silicaten ergibt sich eine dreidimensional verzweigte regelmäßig aufgebaute Bindemittelmatrix, die für eine hervorragende Qualität und Lebensdauer des Reibbelages sorgt. Diese Ausgangsstoffe weisen ferner ein

gutes Benetzungsverhältnis auf, d.h., die in die Bindemittelmatrix gleichzeitig einzuarbeitenden Zuschlagstoffe haften gleichmäßig und feinverteilt an den Ausgangssubstanzen und können ebenso feindispers verteilt gleichmäßig in die Bindemittelmatrix eingebaut werden. Dies sorgt beispielsweise dafür, daß der Reibbelag in jedem Abriebzustand an der Reibfläche gleiche Eigenschaften aufweist.

Als reaktive Bestandteile bei der Herstellung der erfindungsgemäßen Bindemittelmatrix eignen sich amorphes $SiO_2$, ggf. $Al_2O_3$ und, soweit anwesend, das ungelöste $SiO_2$ der amorphen wasserhaltigen Kieselsäure. Besonders bevorzugt sind Gemische aus amorphem $SiO_2$ und $Al_2O_3$, das in Gewichtsverhältnissen von $SiO_2$ zu $Al_2O_3$ im Bereich von 5-98 $SiO_2$ Gew.-% zu 95-2 Gew.-% $Al_2O_3$, vorzugsweise von 5-80 Gew.-% zu 95-20 Gew.-% vorliegen kann.

Das $SiO_2$ liegt vorzugsweise in amorpher, insbesondere wasserfreier Form vor. Diese Form wird auch für das feinteilige Gemisch aus $SiO_2$ und $Al_2O_3$ bevorzugt, wenn auch das $Al_2O_3$, z.B. zum Teil in kristalliner Form, vorliegen kann. Das $SiO_2$ kann auch aus der amorphen, wasserhaltigen Kieselsäure stammen. Die Oxide können Verunreinigungen wie Eisen, Natrium, Kalium und Calcium usw. enthalten. Die oxidischen Bestandteile, also $SiO_2$ und/oder $Al_2O_3$ liegen im Verhältnis zu den wasserlöslichen Silicaten im Verhältnis 80 bis 20:5 bis 60, insbesondere in einem Mengengrößenbereich von 15 Gew.-%, bezogen auf das Gesamtgemisch der beiden Bestandteile vor. Als besonders reaktive Bestandteile eignen sich Stäube aus Hochtemperaturschmelzprozessen, Filterstäube, Elektrofilterasche aus Hochtemperaturkraftwerken, calcinierte und gemahlene Bauxite.

Besonders vorteilhaft sind solche reaktiven Bestandteile, allein oder in Verbindung mit den vorstehenden polykondensierenden Bestandteilen, die hydraulisch abbinden. Hierzu gehören die Klinkerphasen aus der Zementherstellung, wie beispielsweise das Alit ($C_3S$), das Tricalciumaluminat ($C_3A$), wobei C = Calciumoxid, S = Siliciumdioxid und A = Aluminiumoxid bedeutet, Tonerde-Schmelzzement, Anhydride, Gips, wasserfreie Erdalkali- und Magnesiumoxide.

Als wasserlösliche Silicate, die als Härter für die Oxide von $SiO_2$ und $Al_2O_3$ wirken, eignen sich insbesondere Alkali- und/oder Ammoniumsilicate, die allein oder in Abmischungen eingesetzt werden können. Sie besitzen im allgemeinen einen Überschuß an freiem Alkali und/oder Ammonium. Das Molverhältnis zwischen Alkali bzw. Ammonium zu Siliciumoxid liegt im allgemeinen zwischen 1,0 und 5 Mol, vorzugsweise zwischen 1,5 bis 4 Mol $SiO_2$ je Mol Alkali bzw. Ammonium. Besonders bevorzugt sind Kali- und/oder Ammoniumwasserglas, weil sie insbesondere gute und homogene physikalische Eigenschaften der strukturbildenden Matrix verleihen und die notwendigen Zuschlagstoffe sehr gut einbinden. Die Alkali- bzw. Ammoniumsilicate können auch in wässriger Form als Zubereitungen vorliegen.

Besonders vorteilhaft können auch anstelle der Silicate deren Bildungskomponenten, nämlich die entsprechenden Oxide bzw. Hydroxide der Alkali bzw. des Ammoniums und amorphe, disperspulverförmige, wasserhaltige Kieselsäuren enthalten sein.

Diese Maßnahme hat den Vorteil, daß diese Prekursoren der Silicate als Feststoffe gut lagerbar sind und erst vor der Verarbeitung mit Wasser angeteigt werden können.

Es können besonders vorteilhaft auch Salze der Fluorokieselsäure allein oder in Verbindung mit den vorstehend genannten Alkalisilicaten als Härter eingesetzt werden. Hierzu gehören Verbindungen der allgemeinen Formel

$$M^{I}_{2}\left[SiF_6\right],$$

$M^I$ = einwertiges Metall.

Als Beispiele seien Alkali- und Erdalkali-Fluorosilicate, wie Natrium-, Bariumhexafluorosilicate genannt. Auch organische Fluorosilicate sind geeignet, wie z.B. Bis-(methyl-ammonium)-fluorosilicat, Bis-(dibutylammonium)-fluorosilicat, Dianilinium-fluorosilicat.

Die erfindungsgemäße Bindemittelmatrix entsteht entweder durch einen hydraulischen und/oder polykondensierenden Vorgang. Über diese Härtungsmechanismen lassen sich nicht nur ein- und zweikomponentige Reibbelagssysteme herstellen, sondern auch die Abbindeparameter in relativ weiten Grenzen variieren. Hierzu gehören die sogenannten Topfzeiten, die Grün- und Endfestigkeiten.

Da das Wasser bei den erfindungsgemäßen polykondensierenden, die Bindemittelmatrix aufbauenden Substanzen nur Vehikel- und Benetzungsfunktionen besitzt, kann dies bei Kombinationssystemen zur Aktivierung der hydraulisch abbindenden, die Bindemittelmatrix aufbindenden Substanzen genutzt werden, wodurch eine schnellere Grünfestigkeit erreicht wird.

Zuschlagstoffe, die sich insbesondere eignen, um in die erfindungsgemäße Bindemittelmatrix eingebunden zu werden, sind wie folgt:

- Füllstoffe
  Wollastonit, Glimmer, Bariumsulfat, Calciumsulfat, Metallpulver wie z.B. aus Eisen, Kupfer und deren Legierungen
  Gleit- und Schmierstoffe
- wie z.B. Graphit, Bornitrid, Molybdändisulfid, Kupfersulfid, Antimonsulfid und andere Metallsulfide, Fluorpolymere, wie Polytetrafluorethylen. Die Gleit- und Schmierstoffe liegen vorzugsweise als Pulver, Granulate o. dgl. vor.
- Reibwertmodifikatoren
  anorganische Sulfate, wie z.B. Bariumsulfat, anorganische Carbonate, wie z.B. Calciumcarbonat anorganische Oxide, wie z.B. Siliciumdioxid, Cashew-Staub, Gummistaub, Korkpulver o. dgl.

Wie zuvor erwähnt, sind in vielen Einsatzgebieten Verstärkungsmittel nicht mehr notwendig. Es können dennoch, falls es bestimmte Anwendungsgebiete erforderlich machen, Verstärkungsmittel in Form von Fasern hinzugefügt werden.

Beispiele für anorganische Fasern sind:

Glasfasern, Kohlenstoff-Fasern, Steinwolle, Metallwolle, Titanatfasern, Aluminiumsilicat- und Aluminiumoxid-Fasern, Keramik-Fasern, Siliciumcarbid-Fasern, und Fasern aus Eisen und Kupfer und deren Legierungen.

Beispiele für organische Fasern sind:

Polyamid-, Polyacrylnitril, Polyester-, Phenol-, Aramid-, Baumwolle-, Cellulose-Fasern u. dgl.

Bei diversen Einsätzen von Reibbelägen werden oftmals poröse Strukturen gefördert, um schalldämpfende und wärmeisolierende Funktionen zu unternehmen und/oder das Eigengewicht zu reduzieren. Bei sogenannten naßlaufenden Reibbelägen ist es notwendig, daß Poren für die Ölaufnahme vorhanden sind. Es ist daher bei einer Ausgestaltung der Erfindung vorgesehen, selbsttragende Strukturschäume dadurch herzustellen, daß vor oder während des Abbindeprozesses Bläh- und/oder Treibmittel zugesetzt werden. Als Bläh- und/oder Treibmittel sind erfindungsgemäß u.a. Peroxi-Verbindungen, wie z.B. Wasserstoffperoxid, Persulfate, Perborate, Percarbonate, organische Peroxide, wie z.B. Dibenzoylperoxid oder auch solche Verbindungen geeignet, die beim Kontakt mit Wasser Gase bilden oder sich aufblähen, wie z.B. Carbide, Aluminiumpulver, Metallhydride, Hydrazin-Derivate, Semicarbazide o. dgl. Auch durch das Einführen von Gasen, wie z.B. Luft, Stickstoff, Kohlendioxid während der Topfzeitphase lassen sich Schäume erzeugen. Diese Schäume können offen- oder geschlossenzellig sein, so daß sie eine große Einsatzbreite abdecken können.

Es ist auch möglich, Porenstrukturen dadurch herzustellen, daß Pulver oder Faserstoffe als Porenbildner zugesetzt werden, die beim Aushärten, verdampfen, ausschmelzen oder schrumpfen.

Desweiteren können die erfindungsgemäßen Reibmaterialien weitere Füllstoffe wie Pigmente, Farbstoffe, Thixotropiermittel oder auch andere Zuschlagstoffe zur Regulierung der rheologischen Eigenschaften der Benetzung o. dgl. zugesetzt werden.

Beim erfindungsgemäßen Verfahren wird vorzugsweise derart vorgegangen, daß das innige, homogene Gemisch der Ausgangsbestandteile $SiO_2$ und wasserlösliche Silicate und die notwendigen Zuschlagstoffe mit Wasser bis zur verformbaren Konsistenz angeteigt oder zunächst die Ausgangsbestandteile mit Wasser verarbeitet und dann die notwendigen Zuschlagstoffe unter Bildung einer fließfähigen, teigigen Konsistenz zugegeben werden und die Masse dann ggf. nach Verformung ausgehärtet wird. Die aushärtenden Massen können auch auf ein Trägermaterial aus metallenen, anorganischen oder organischen Werkstoffen aufgebracht werden und anschließend aushärten. Solche Trägermaterialien können Stähle, Eisen, Holz, Steine, Beton, Kunststoffe wie Duro- oder Thermoplaste o. dgl. sein.

Es ist auch vorgesehen, die ausgeformten und ausgehärteten Reibbeläge durch Verkleben mit dem Trägermaterial zu verbinden. Bei Hochtemperatureinsätzen wird ein hochtemperaturbeständiger Klebstoff, insbesondere auf Silicatbasis, eingesetzt, der jeweils einen innigen Verbund zwischen Reibbelag und Trägermaterial ergibt.

Beim Herstellen der Kompaktmasse für einen Reibbelag kann die Masse zuvor mittels Vakuum entgast werden. Eine Entgasung kann aber auch an den vorgeformten Gießlingen oder an der Reibbelagsbeschichtung durch Rütteln oder Evakuieren erzielt werden.

Das Wasser oder ein wässriges, alkalisches Medium kann dabei z.B. in Mengen von 5-70 Gew.-%, vorzugsweise 20-50 Gew.-%, bezogen auf die Gesamttrockenmasse, eingesetzt werden.

Die mit Wasser angeteigten Massen lassen sich durch Gießen, Extrudieren und Pressen verarbeiten.

Bei der Herstellung von kompakten Reibbelägen wird etwa während 1 bis 2 Stunden bei +85 °C gehärtet, wobei eine exotherme Polykondensation einsetzt. Anschließend erfolgt ein Nachtrocknen bei 20

bis 50 °C bis zur Gewichtskonstanz, um das restliche Haftwasser auszutreiben. Sind die Reibbeläge für Einsätze bei höheren Temperaturen vorgesehen, werden sie stufenweise auf Temperaturen von +80° bis 1 500 °C erhitzt, wobei eine Nachhärtung zu beobachten ist. Für Hochtemperatur-Einsatzbereiche ist allgemein eine stufenweise Aufheizung bis über die Einsatztemperaturen notwendig, um gute Temperatur- und Formbeständigkeit zu erzielen.

Bei der Herstellung von porigen Reibbelägen härten die Massen bei 20 °C in maximal 2 Stunden oder bei 50 °C in etwa 1 Stunde aus. Ein Nachhärten kann bei +50 bis +100 °C erfolgen. Sind die porigen Reibbeläge ebenfalls für den Hochtemperatureinsatz vorgesehen, so erfolgt ebenfalls ein stufenweises Aufheizen auf Temperaturen bis 1 100 °C.

Es wurde in überraschenderweise gefunden, daß ein stufenweises Nachhärten der Reibbeläge zu besonders niedrigen Abriebwerten führt.

Die Reibbeläge lassen sich erforderlichenfalls auch hydrophob ausrüsten, hierzu sind beispielsweise Silane, Polydimethoxisilane o. dgl. geeignet.

Bedingt durch die niederen Verarbeitungstemperaturen ist mit den erfindungsgemäßen anorganischen Mitteln zum Herstellen der Bindemittelmatrix eine außerordentlich große Variationsbreite schon deshalb gegeben, weil alle vorstehenden und anderen Zuschlagstoffe einfach in die Strukturmatrix integrierbar sind.

Einige ausgewählte Ausführungsbeispiele an erfindungsgemäßen Reibbelägen bzw. dessen Herstellung wird anhand der nachfolgenden Ausführungsbeispiele näher beschrieben.

Bei der Herstellung wird von folgenden Oxidgemischen Gebrauch gemacht, die als Reaktivstoff anzusehen sind:

| | | |
|---|---|---|
| Nr. 1 | 25 Gew.-%<br>75 Gew.-% | $SiO_2$<br>$Al_2O_3$ |
| Nr. 2 | 30 Gew.-%<br>70 Gew.-% | $SiO_2$<br>$Al_2O_3$ |
| Nr. 3 | 40 Gew.-%<br>70 Gew.-% | $SiO_2$<br>$Al_2O_3$ |

Als Härterlösungen wurden folgende Gemische eingesetzt:

| | | |
|---|---|---|
| Nr. 1 | 20,00 Gew.-%<br>20,88 Gew.-%<br>59,12 Gew.-% | $SiO_2$<br>$K_2O$<br>Wasser |
| Nr. 2 | 20,00 Gew.-%<br>20,88 Gew.-%<br>59,12 Gew.-% | $SiO_2$<br>$Na_2O$<br>Wasser |
| Nr. 3 | 19,75 Gew.-%<br>26,08 Gew.-%<br>1,15 Gew.-%<br>53,02 Gew.-% | $K_2O$<br>$SiO_2$<br>$NH_4OH$<br>Wasser |

Beispiel 1:

In einem 2-Liter-Behälter werden 366 Gewichtsteile (GT) des Härters Nr. 1 vorgelegt. In dieser Vorlage werden mit einem schnellaufenden Rührwerk 366 GT des Feststoffes Nr. 1 eingerührt. In die homogene Bindemittelmasse wurden 83 GT Graphitgranulat, 166 GT Kupferpulver, 119 GT Baumwollfaser eingearbeitet. Anschließend wurde die gießfähige Masse in eine Form aus Siliconkautschuk gegossen und 90 Minuten bei 85 °C gehärtet. Anschließend wurde die Reibbelagsformulierung 2 Stunden bei 50 °C bis zur Gewichtskonstanz getrocknet.

Beispiel 2:

In Abänderung des Beispiels 1 wurden nur 230 GT des Härters Nr. 2 im Behälter vorgelegt und 440 GT Feststoff Nr. 1 eingearbeitet. Die übrigen Zusätze und deren Menge entsprachen denen des Beispiels 1. Analoges gilt für die Härtung.

Beispiel 3:

In 246 GT Härter Nr. 3 wurden 246 GT des Feststoffs Nr. 2 mit einem schnellaufenden Rührwerk eingearbeitet. Anschließend wurden 246 GT Kupferpulver und 268 GT Graphitgranulat eingearbeitet. Nach dem Herstellen eines Formlings wurde die Masse bei 85 °C 1 Stunde gehärtet. Die Nachhärtung erfolgte je 1 Stunde bei 150 °C, 200 °C und 220 °C.

Beispiel 4:

In 270 GT Härter Nr. 1 wurden 335 GT des Feststoffes Nr. 3 mit einem schnellaufenden Rührwerk homogen eingearbeitet. Anschließend erfolgte der Zusatz von 136 GT Kupferpulver und 263 GT Graphitgranulat. Der aus dieser Masse hergestellte Formling wurde bei 85 °C 1 Stunde gehärtet. Die Nachhärtung erfolgte je 1 Stunde bei 150 °C, 250 °C und 280 °C.

Beispiele 5 bis 10:

In den Beispielen 5 bis 10 wurde gemäß Beispiel 1 verfahren. Die Reibbeläge hatten folgende Zusammensetzung:

| Rohstoffe Gew.-% | | Beispiel Nr. 5 | 6 | 7 | 8 | 9 | 10 |
|---|---|---|---|---|---|---|---|
| Reaktivstoff | Nr. 1 | 27 | - | - | - | 25 | - |
| | Nr. 2 | - | 27 | - | 33 | - | 26 |
| | Nr. 3 | - | - | 34,2 | - | - | - |
| Härter | Nr. 1 | 18 | - | - | 22 | - | - |
| | Nr. 2 | - | - | 22,8 | - | - | - |
| | Nr. 3 | - | 27 | - | - | 25 | 26 |
| Graphitgranulat | | 30 | 18 | 15 | 20 | 18 | 20 |
| PTFE-Pulver | | - | - | 8 | - | - | - |
| Eisenpulver | | 20 | 10 | 15 | - | 10 | 15 |
| Stahlfasern | | - | - | - | 15 | - | - |
| Glasfasern | | - | 10 | - | - | - | - |
| Aramidfasern | | - | 8 | - | 5 | 6 | - |
| Carbonfasern | | - | - | - | - | 12 | 13 |
| Kautschukpulver | | - | - | 5 | - | - | - |
| Bariumsulfat | | - | - | - | 5 | 4 | - |
| Cashew-Staub | | 5 | - | - | - | - | - |
| Härtungstemperaturen °C | | 80 | 85 | 90 | 100 | 85 | 85 |
| Nachhärtung bis °C | | 120 | 300 | 250 | 300 | 200 | 1500 |

## Patentansprüche

**1.** Reibbelag, bestehend aus einer anorganischen, silicathaltigen Bindemittelmatrix, in der Zuschlagstoffe integriert sind, wobei die Bindemittelmatrix aus einer in Gegenwart von Wasser ausgehärteten Mischung an

a) feinteiligem $SiO_2$ und

b) zumindest teilweise wasserlöslichen Silicaten hergestellt ist.

**2.** Reibbelag nach Anspruch 1, dadurch gekennzeichnet, daß das Verhältnis der Anteile a):b) 80 bis 20:5 bis 60 ist.

**3.** Reibelag nach Anspruch 1 oder 2, dadurch gekennzeichnet, daß der Bestandteil a) der Mischung aus einer Mischung aus feinteiligem $SiO_2$ und $Al_2O_3$ besteht.

**4.** Reibbelag nach Anspruch 3, dadurch gekennzeichnet, daß das Gewichtsverhältnis von $SiO_2$ zu $Al_2O_3$ 5-98 Gew.-% $SiO_2$ : 95-2 Gew.-% $Al_2O_3$, vorzugsweise 5-80 Gew.-% $SiO_2$ : 95-20 Gew.-% $Al_2O_3$

beträgt.

**5.** Reibbelag nach einem der Ansprüche 1 bis 4, dadurch gekennzeichnet, daß der Bestandteil a) Stäube, ausgewählt aus der Gruppe bestehend aus Stäuben aus Hochtemperaturschmelzprozessen, Filterstäube, Elektrofilterasche aus Hochtemperaturkraftwerken, calcinierte Bauxite, enthält.

**6.** Reibbelag nach einem der Ansprüche 1 bis 5, dadurch gekennzeichnet, daß der Bestandteil a) der Mischung zumindest teilweise unlösliches $SiO_2$ aus amorphen, dispers-pulverförmigen, wasserhaltigen Kieselsäuren enthält.

**7.** Reibbelag nach einem der Ansprüche 1 bis 6, dadurch gekennzeichnet, daß der Bestandteil a) der Mischung wasserfreie Oxide der zweiten Hauptgruppe des Periodensystems und/oder der Klinkerphasen aus der Zementherstellung, insbesondere Alit und Tricalciumaluminat enthält.

**8.** Reibbelag nach einem der Ansprüche 1 bis 7, dadurch gekennzeichnet, daß die teilweise wasserlöslichen Silicate in Anteil b) Alkali- und/oder Ammoniumsilicate sind.

**9.** Reibbelag nach einem der Ansprüche 1 bis 8, dadurch gekennzeichnet, daß die teilweise wasserlöslichen Silicate des Anteiles b) in Form von Alkaliprekursoren bzw. Ammoniumprekursoren insbesondere in Form von festem Alkalihydroxid in amorpher, dispers-pulverförmiger, wasserhaltiger Kieselsäure vorgesehen sind.

**10.** Reibbelag nach Anspruch 8 oder 9, dadurch gekennzeichnet, daß das Molverhältnis zwischen Alkali bzw. Ammonium und Siliciumdioxid zwischen 1 und 5, vorzugsweise zwischen 1,2 bis 4 Mol $SiO_2$ pro Mol Alkali bzw. Ammonium liegt.

**11.** Reibbelag nach einem der Ansprüche 1 bis 10, dadurch gekennzeichnet, daß ferner
c) Salze der Fluorokieselsäure und/oder organische Fluorosilicate in der aushärtenden Mischung enthalten sind.

**12.** Reibmaterial nach Anspruch 11, dadurch gekennzeichnet, daß der Bestandteil c) ganz oder teilweise aus Salzen der Fluorokieselsäure der allgemeinen Formel

$$M^{I}_{2}\left[SiF_6\right],$$

wobei $M^I$ ein einwertiges Metall ist, besteht.

**13.** Reibbelag nach einem der Ansprüche 1 bis 12, dadurch gekennzeichnet, daß als Zuschlagstoffe Füllstoffe enthalten sind, insbesondere ausgewählt aus der Gruppe bestehend aus Wollastonit, Glimmer, Bariumsulfat, Calciumsulfat, Metallpulver, z.B. Eisen, Kupfer, oder Legierungen.

**14.** Reibbelag nach einem der Ansprüche 1 bis 13, dadurch gekennzeichnet, daß als Zuschlagstoffe Gleit- und Schmierstoffe enthalten sind, insbesondere ausgewählt aus der Gruppe bestehend aus Graphit, Bornitrid, Molybdändisulfid, Kupfersulfid, Antimonsulfid, Fluorpolymere, wie Polytetrafluorethylen, insbesondere in Form von Pulver, Granulaten.

**15.** Reibbelag nach einem der Ansprüche 1 bis 14, dadurch gekennzeichnet, daß als Zuschlagstoffe Reibwertmodifikatoren enthalten sind, insbesondere ausgewählt aus der Gruppe bestehend aus anorganischen Sulfaten wie Bariumsulfat, anorganischen Carbonaten wie Calciumcarbonat, anorganischen Oxiden, wie Siliciumdioxid, Cashew-Staub, Gummistaub, Korkpulver.

**16.** Reibbelag nach einem der Ansprüche 1 bis 15, dadurch gekennzeichnet, daß als Zuschlagstoffe anorganische oder organische Fasern enthalten sind, insbesondere ausgewählt aus der Gruppe bestehend aus Glasfasern, Kohlenstoff-Fasern, Steinwolle, Metallwolle, Titanat-Fasern, Aluminiumsilicat-

und Aluminiumoxid-Fasern, Keramik-Fasern, Siliciumcarbid-Fasern, Fasern aus Eisen und Kupfer und deren Legierungen; Polyamid-, Polyacrylnitril-, Polyester-, Phenol-, Aramid-, Baumwolle-, Cellulose-Fasern.

**17.** Reibbelag nach einem der Ansprüche 1 bis 16, dadurch gekennzeichnet, daß die Zuschlagstoffe im Mengenverhältnis von 1-50 Gew.-% im Vergleich auf die verbleibenden Stoffe vorhanden sind.

**18.** Reibbelag nach einem der Ansprüche 1 bis 17, dadurch gekennzeichnet, daß schaumbildende Bestandteile, die beim Kontakt mit Wasser Gase freisetzen, eingesetzt werden.

**19.** Reibbelag nach einem der Ansprüche 1 bis 18, dadurch gekennzeichnet, daß er über eine hochtemperaturbeständige Klebverbindung, insbesondere mittels eines Klebemittels auf Silicatbasis, mit einem Trägermaterial verbunden ist.

**20.** Verfahren zum Herstellen eines Reibbelages nach einem der Ansprüche 1 bis 19, dadurch gekennzeichnet, daß das innige, homogene Gemisch der Bestandteile a), b) und ggf. c) mit Wasser bis zur verformbaren Konsistenz angeteigt und dann die ggf. zuzugebenden Zuschlagstoffe unter Bildung einer fließfähigen, teigigen Konsistenz zugegeben und die erhaltene Masse dann gehärtet wird.

**21.** Verfahren nach Anspruch 20, dadurch gekennzeichnet, daß die Härtung bei Temperaturen zwischen 80 und 120 °C erfolgt.

**22.** Verfahren nach Anspruch 20 und 21, dadurch gekennzeichnet, daß die gehärteten Massen stufenweise bis über Einsatztemperatur nachgetempert werden.

**23.** Verfahren nach einem der Ansprüche 20 bis 22, dadurch gekennzeichnet, daß die aushärtenden Massen auf ein Trägermaterial ggf. geformt gegeben werden und anschließend aushärten, wobei eine innige Verbindung zwischen Trägermaterial und Reibbelag stattfindet.

**24.** Verfahren nach einem der Ansprüche 20 bis 23, dadurch gekennzeichnet, daß der ausgehärtete Reibbelag mittels eines hochtemperaturbeständigen Klebemittels, insbesondere eines Klebemittels auf Silicatbasis, mit einem Trägermaterial verbunden wird.

## Claims

**1.** Friction lining consisting of an inorganic silicate-containing binder matrix into which additives are integrated, wherein the binder matrix is produced from a mixture of
a) finely divided $SiO_2$, and
b) at least partially water-soluble silicates, said mixture cured in the presence of water.

**2.** Friction lining according to claim 1, characterized in that the ratio between constituents a) : b) is 80 to 20 : 5 to 60.

**3.** Friction lining according to claims 1 or 2, characterized in that constituent a) of said mixture consists of a mixture of finely divided $SiO_2$ and $Al_2O_3$.

**4.** Friction lining according to claim 3, characterized in that the weight ratio of $SiO_2$ to $Al_2O_3$ is 5-98 wt% $SiO_2$ : 95-2 wt% $Al_2O_3$, preferably 5-80 wt% $SiO_2$ : 95-20 wt% $Al_2O_3$.

**5.** Friction lining according to anyone of claims 1 through 4, characterized in that constituent a) contains dusts, selected from the group consisting of dusts from high-temperature smelting processes, filter dusts, electrostatic filter ash from high-temperature power plants, and calcined bauxite.

**6.** Friction lining according to anyone of claim 1 through 5, characterized in that constituent a) of said mixture contains at least partially insoluble $SiO_2$ from amorphous hydrous silicic acids in dispersed powder form.

**7.** Friction lining according to anyone of claims 1 through 6, characterized in that constituent a) of said mixture contains anhydrous oxides of the second main group of the periodic table and/or clinker phases from cement production, in particular alite and tricalcium aluminates.

**8.** Friction lining according to anyone of claims 1 through 7, characterized in that said at least partially water-soluble silicates in constituent b) are alkaline and/or ammonium silicates.

**9.** Friction lining according to anyone of claims 1 through 8, characterized in that said partially water-soluble silicates of constituent b) are provided in the form of alkali precursors and ammonium precursors, respectively, in particular in the form of solid alkaline hydroxide, contained in amorphous hydrous silicic acid being in dispersed powder form.

**10.** Friction lining according to claims 8 or 9, characterized in that the molar ratio between alkali and ammonium, respectively, and silicon dioxide is between 1 and 5 mol, preferably between 1,2 and 4 mol $SiO_2$ per mol alkali and ammonium, respectively.

**11.** Friction lining according to anyone of claims 1 through 10, characterized in that additionally
c) salts of fluorosilicic acid and/or organic fluorosilicates are contained in the curing mixture.

**12.** Friction lining according to claim 11, characterized in that constituent c) consists entirely or partially of salts of fluorosilicic acids with a general formula

$$M^{I}_{2}\left[SiF_6\right],$$

wherein $M^I$ is a monovalent metal.

**13.** Friction lining according to anyone of claims 1 through 12, characterized in that fillers are included as additives, in particular those selected from the group consisting of wollastonite, mica, barium sulfate, calcium sulfate, and powdered metals, for example iron, copper or alloys thereof.

**14.** Friction lining according to anyone of claims 1 through 13, characterized in that sliding agents and lubricants are included as additives, in particular those selected from the group consisting of graphite, boron nitride, molybdenum disulfide, copper sulfide, antimony sulfide, fluoropolymers, like polytetrafluoroethylene, said additives being in particular in the form of powders and granules.

**15.** Friction lining according to anyone of claims 1 through 14, characterized in that coefficient of friction modifiers are included as additives, in particular those selected from the group consisting of inorganic sulfates like barium sulfate, inorganic carbonates, like calcium carbonate, inorganic oxides like silicon dioxide, cashew dust, rubber dust, and cork powder.

**16.** Friction lining according to anyone of claims 1 through 15, characterized in that inorganic or organic fibers are included as additives, in particular those selected from the group consisting of glass fibers, carbon fibers, rock wools, metal wools, titanate fibers, aluminium silicate fibers, aluminium oxide fibers, ceramic fibers, silicon carbide fibers, fibers made from iron, copper and alloys thereof, polyamide fibers, polyacrylonitrile fibers, polyester fibers, phenol fibers, aramid fibers, cotton fibers, and cellulose fibers.

**17.** Friction lining according to anyone of claims 1 through 16, characterized in that said additives are present in a weight ratio of 1 - 50 wt% compared to the remaining substances.

**18.** Friction lining according to anyone of claims 1 through 17, characterized in that foam-forming constituents releasing gases on contact with water are used.

19. Friction lining according to anyone of claims 1 through 18, characterized in that said friction lining is attached by means of a high-temperature adhesive, in particular a silicate-based adhesive, to a support material.

20. Process for producing a friction lining according to anyone of claims 1 through 19, characterized in that the intimate, homgenous mixture of constituents a), b) and, if present, c) is mixed with water into a paste of workable consistency, and then adding any additives that are to be added to that paste, thereby forming a pourable pasty consistency, and finally curing the resulting mass.

21. Process according to claim 20, characterized in that said curing is performed with temperatures between 80 and 120 ° C.

22. Process according to claims 20 or 21, characterized in that said cured mass is after-baked in stages to above utilization temperature.

23. Process according to anyone of claims 20 through 22, characterized in that the curing mass is placed onto a support material, if desired formed in a particular shape, and followed by curing said mass, thereby providing an intimate bond between said support material and said friction lining.

24. Process according to anyone of claims 20 through 23, characterized in that the resulting cured friction lining is attached to a support material by means of a high-temperature adhesive, in particular by means of an silicate-based adhesive.

**Revendications**

1. Garniture de friction, constituée d'une matrice de liant non organique, contenant des silicates, dans laquelle sont intégrés des additifs, la matrice de liant étant réalisée à partir d'un mélange durci en présence d'eau, de
   a) $SiO_2$ en fines particules et
   b) de silicates au moins en partie solubles dans l'eau.

2. Garniture de friction selon la revendication 1, caractérisée en ce que le rapport des proportions a) à b) est de 80 à 20 : 5 à 60.

3. Garniture de friction selon la revendication 1 ou 2, caractérisée en ce que le composant a) du mélange est fait d'un mélange de $SiO_2$ en fines particules et de $Al_2O_3$.

4. Garniture de friction selon la revendication 3, caractérisée en ce que le rapport des poids de $SiO_2$ à $Al_2O_3$ est de 5 à 98 % en poids de $SiO_2$ pour 95 à 2 % en poids de $Al_2O_3$, de préférence égal à 5 à 80 % en poids de $SiO_2$ pour 95 à 20 % en poids de $Al_2O_3$.

5. Garniture de friction selon l'une des revendications 1 à 4, caractérisée en ce que le composant a) contient des poussières, choisies dans le groupe constitué par des poussières de procédés de fusion à haute température, de poussières de filtres, de cendres d'électrofiltres, de centrales électriques à haute température, de bauxites calcinées.

6. Garniture de friction selon l'une des revendications 1 à 5, caractérisée en ce que le composant a) du mélange contient du $SiO_2$ au moins en partie insoluble constitué d'acides siliciques amorphes, pulvérulents en dispersion, aqueux.

7. Garniture de friction selon l'une des revendications 1 à 6, caractérisée en ce que le composant a) du mélange contient des oxydes déshydratés du deuxième groupe principal de la classification périodique des éléments et/ou des phases de clinker provenant de la fabrication du ciment, en particulier de l'alite et de l'aluminate tricalcique.

8. Garniture de friction selon l'une des revendications 1 à 7, caractérisée en ce que les silicates en partie solubles dans l'eau du composant b) sont des silicates alcalins et/ou des silicates d'ammonium.

**9.** Garniture de friction selon l'une des revendications 1 à 8, caractérisée en ce que les silicates en partie solubles dans l'eau du composant b) sont prévus sous la forme de précurseurs alcalins ou de précurseurs d'ammonium en particulier sous la forme d'hydroxydes alcalins solides dans de l'acide silicique amorphe, pulvérulent en dispersion, aqueux.

**10.** Garniture de friction selon la revendication 8 ou 9, caractérisée en ce que le rapport molaire entre l'alcali ou l'ammonium et le dioxyde de silicium est compris entre 1 et 5, de préférence entre 1,2 et 4 moles $SiO_2$ par mole d'alcali ou d'ammonium.

**11.** Garniture de friction selon l'une des revendications 1 à 10, caractérisée en ce qu'en outre
c) des sels d'acides siliciques fluorés et/ou de silicates de fluor organiques sont contenus dans le mélange durcisseur.

**12.** Garniture de friction selon la revendication 11, caractérisée en ce que le composant c) est entièrement ou partiellement constitué de sels de l'acide silicique fluoré de formule générale

$$M^{I}_{2}\left[SiF_6\right],$$

dans laquelle $M^I$ est un métal monovalent.

**13.** Garniture de friction selon l'une des revendications 1 à 12, caractérisée en ce que sont contenues comme additifs des charges, choisies en particulier dans le groupe constitué par la wollastonite, le mica, le sulfate de baryum, le sulfate de calcium, une poudre métallique, par exemple de fer, de cuivre, ou d'alliages.

**14.** Garniture de friction selon l'une des revendications 1 à 13, caractérisée en ce que sont contenus comme additifs des agents antifriction et des lubrifiants, choisis en particulier dans le groupe constitué de graphite, de nitrure de bore, de bisulfure de molybdène, de sulfure de cuivre, de sulfure d'antimoine, de fluoropolymères, tels que le polytétrafluoréthylène, en particulier sous forme de poudre, de granulés.

**15.** Garniture de friction selon l'une des revendications 1 à 14, caractérisée en ce que sont contenus comme additifs des modificateurs du coefficient de friction, choisis en particulier dans le groupe constitué par les sulfates non organiques tels que le sulfate de baryum, les carbonates non organiques tels que le carbonate de calcium, les oxydes non organiques, tels que le dioxyde de silicium, la poussière de cajou, la poussière de caoutchouc, la poussière de liège.

**16.** Garniture de friction selon l'une des revendications 1 à 15, caractérisée en ce que sont contenues comme additifs des fibres organiques ou non, choisies en particulier dans le groupe constitué par les fibres de verre, les fibres de carbone, la laine de roche, la laine de métal, les fibres de titanate, les fibres de silicate d'aluminium et d'oxyde d'aluminium, les fibres de céramique, les fibres de carbure de silicium, les fibres de fer et de cuivre et de leurs alliages ; les fibres de polyamide, de polyacrylnitrile, de polyester, de phénol, d'aramide, de coton, de cellulose.

**17.** Garniture de friction selon l'une des revendications 1 à 16, caractérisée en ce que les additifs sont contenus à raison de 1 à 50 % en poids par rapport aux substances restantes.

**18.** Garniture de friction selon l'une des revendications 1 à 17, caractérisée en ce que sont ajoutés des composants moussants qui au contact avec l'eau libèrent des gaz.

**19.** Garniture de friction selon l'une des revendications 1 à 18, caractérisée en ce qu'elle est assemblée à un matériau de support, par un assemblage collé résistant aux hautes températures, en particulier au moyen d'une colle à base de silicate.

**20.** Procédé de fabrication d'une garniture de friction selon l'une des revendications 1 à 19, caractérisé en ce qu'on forme une pâte jusqu'à consistance déformable en ajoutant de l'eau au mélange homogène, intime, des composants a), b) et éventuellement c), et en ajoutant ensuite les éventuels additifs jusqu'à obtenir une consistance pâteuse, coulante et on fait durcir ensuite la pâte obtenue.

**21.** Procédé selon la revendication 20, caractérisé en ce que le durcissement s'effectue à des températures comprises entre 80 et 120 °C.

**22.** Procédé selon les revendications 20 et 21, caractérisé en ce que les pâtes durcies sont progressivement tempérées jusqu'à la température d'utilisation.

**23.** Procédé selon l'une des revendications 20 à 22, caractérisé en ce que les pâtes à durcir sont appliquées sur un matériau de support éventuellement formé et durcissent ensuite, une liaison intime entre le matériau de support et la garniture de friction ayant lieu.

**24.** Garniture de friction selon l'une des revendications 20 à 23, caractérisée en ce que la garniture de friction durcie est assemblée à un matériau de support au moyen d'une colle résistant aux hautes températures, en particulier une colle à base de silicate.